# EUROPÄISCHE PATENTSCHRIFT

(11) **EP 0 537 672 B1**
(45) Veröffentlichungstag und Bekanntmachung des Hinweises auf die Patenterteilung: **06.08.1997**
(21) Anmeldenummer: 92117441.3
(22) Anmeldetag: 13.10.1992
(51) Int. Cl.: C08G 63/199, C08G 63/85, C08G 63/78

(54) **Verfahren zur kontinuierlichen Polykondensation von Terephthalsäure und 1,4-Bis-(hydroxymethyl)-cyclohexan**
Process for continuous polycondensation of terephthalic acid and 1,4-Bis(hydroxymethyl)-cyclohexane
Procédé pour la polycondensation en continue d'acide téréphthalique et de 1,4-bis(hydroxyméthyl)cyclohexane

(30) Priorität: 16.11.1991 DE 4137842
(43) Veröffentlichungstag der Anmeldung: 21.04.1993
(73) Patentinhaber: Zimmer Aktiengesellschaft, D-60388 Frankfurt (DE)
(72) Erfinder: Kyber, Manfred, W-6457 Maintal 2 (DE); Schmidt, Wolfgang, Dr., W-6458 Rodenbach 2 (DE); Thiele, Ulrich, Dr., W-6454 Bruchköbel (DE)

(56) Entgegenhaltungen:
- EP-A- 0 046 670
- EP-A- 0 290 287
- DE-A- 1 258 086
- DE-A- 2 414 122
- GB-A- 1 445 034
- US-A- 3 431 243
- DATABASE WPI Week 7622, Derwent Publications Ltd., London, GB; AN 76-40960X
- DATABASE WPI Week 7627, Derwent Publications Ltd., London, GB; AN 76-50653X

## Beschreibung

Die Erfindung betrifft ein kontinuierliches Verfahren zur Herstellung von (1,4-Cyclohexandimethylen)terephthalat-Polymeren ausgehend von Terephthalsäure.

(1,4-Cyclohexandimethylen)terephthalat-Polymere und -Copolymere sind seit langem bekannt und zeichnen sich durch hohe Schmelztemperaturen aus (US-A-2901466, US-A-3261812, US-A-4042570).

Obgleich der Einsatz von Terephthalsäure als Rohstoff nicht ausgeschlossen wird, so sind doch in der Literatur nur Beispiele zu finden, die von Terephthalsäuredialkylestern ausgehen. Die zur Sicherstellung der Schmelzphase während der Polykondensation erforderlichen hohen Temperaturen führen zu Zersetzungsprodukten, die gleichzeitig als Kettenabbruchmittel wirken und somit die Bildung von hochmolekularen Polymeren verhindern (US-A-3271370). Um unter anderem diesem Abbau zu begegnen, wurde vorgeschlagen, Diol und Terephthalsäuredialkylester in etwa äquimolaren Mengen einzusetzen (US-A-3271370), Zinkfluortitanat als besonders aktiven Katalysator zu verwenden (US-A-3068204), die Umesterungsstufe unter Stickstoff auszuführen (US-A-4042570) oder ein stabilisierend wirkendes Comonomer, wie Gentisinsäure-Derivate, einzupolymerisieren (DE-A-1495570).

Diese Neigung zur Bildung von als Kettenabbruchmittel wirkenden Zersetzungsprodukten tritt bei Einsatz von Terephthalsäure als Rohstoff in wesentlich verstärktem Maße auf, wobei sich die zuvor erwähnten Gegenmaßnahmen als nicht oder ungenügend wirksam erwiesen.

Bei Versuchen, die in der Literatur für Dimethylterephthalat gegebenen Beispiele auf Terephthalsäure zu übertragen, zeigte sich, daß bereits nach 40 bis 60 min Polykondensationszeit bei 295 bis 305 °C die Abbaureaktion die Aufbaureaktion deutlich übersteigt, begleitet von einem exponentiellen Absinken der Intrinsic-Viskosität und von Verfärbungen des Polymers. Bei längerer thermischer Belastung konnte sogar eine Zersetzung bis zum Oligomeren beobachtet werden. Auch konnte die für den DMT-Prozeß im US-A-3 271 370 gemachte Aussage, daß ein Diol-Überschuß unvorteilhaft sei, bei Terephthalsäure-Einsatz nicht bestätigt werden.

Bei diesen kettenabbrechenden Substanzen handelt es sich um Metaboliten des 1,4-Bis(hydroxymethyl)-cyclohexans, die durch Dehydratisierung der an den Cyclohexanring gebundenen freien oder veresterten CH₂OH-Gruppen unter Bildung von Methylencyclohexan- und Methylcyclohexen-Derivaten entstehen. Diese Dehydratisierung wird durch Säuren im allgemeinen und durch Terephthalsäure im besonderen sowie durch die während des Polykondensationsverfahrens durch Spaltung von Esterbindungen entstehenden COOH-Endgruppen katalysiert.

Aufgabe der vorliegenden Erfindung ist somit, ein kontinuierliches Verfahren aufzufinden, welches die Herstellung hochmolekularer, stabiler (1,4-Cyclohexandimethylen)terephthalat-Polymerer und Copolymerer ausgehend von Terephthalsäure erlaubt. Insbesondere umfaßt die Aufgabe die Minimierung der autokatalytischen Wirkung der sauren Gruppen der Terephthalsäure auf die Dehydratisierung der am Cyclohexanring gebundenen CH₂OH-Gruppen.

Diese Aufgabe wird erfindungsgemäß entsprechend den Angaben der Patentansprüche gelöst.

Nach dem erfindungsgemäßen Verfahren können sowohl Homopolymere als auch Copolymere hergestellt werden. Zum Einsatz kommt Terephthalsäure in der für Polyester üblichen Qualität. Das 1,4-Bis-(hydroxymethyl)cyclohexan sollte ein cis-/trans-Isomerenverhältnis im Bereich von 20 bis 40 cis zu 80 bis 60 trans, vorzugsweise von 30 cis zu 70 trans aufweisen und in einem deutlichen Überschuß eingesetzt werden. Bis zu 20 Mol-% der Terephthalsäure können durch andere Dicarbonsäuren wie z. B. Isophthalsäure, Cyclohexandicarbonsäure oder Adipinsäure, ersetzt werden. Desgleichen kann das 1,4-Bis-(hydroxymethyl)cyclohexan partiell durch andere Alkandiole, wie z. B. Ethylenglykol oder 1,4-Butandiol, und/oder durch Polyalkylenoxid-diole, wie z. B. Diethylenglykol oder niedermolekulares Polybutylenoxid-glykol, ersetzt sein. Die Summe der Comonomeren im Polyester sollte jedoch 20 Mol-%, bezogen auf Polyester, nicht überschreiten, da andernfalls eine Anpassung der Reaktionstemperaturen erforderlich wird. Wegen der zum Teil sehr unterschiedlichen Flüchtigkeit und Reaktivität der genannten Diole muß der Anteil an Co-Diol im Einsatz-Monomeren-Gemisch mitunter wesentlich höher sein als im resultierenden Polyester. Co-Diole, wie Ethylenglykol und Diethylenglykol, weisen einen sehr viel niedrigeren Siedepunkt auf als 1,4-Bis-(hydroxymethyl)-cyclohexan und werden entsprechend bevorzugt mit den Reaktionsbrüden, insbesondere der Veresterungsstufe a) ausgetrieben. Die für einen bestimmten Anteil im Copolyester erforderlichen Einsatzmengen Comonomer können, soweit sie dem Fachmann nicht ohnehin geläufig sind, durch Vorversuch ermittelt werden.

Die erfindungsgemäße Minimierung der autokatalytischen Abbaureaktionen wird nur erzielt, wenn neben üblichen Druckbereichen gleichzeitig folgende Maßnahmen eingehalten werden:
- gesplittete 1,4-Bis-(hydroxymethyl)-cyclohexan-Zufuhr bei einem Gesamt-Mol-Verhältnis Diol zu Disäure von mindestens 1,2 zu 1,
- gesplittete Katalysator-Zufuhr,
- eng begrenzte Temperaturbereiche in Stufe b) und c),
- begrenzte, relativ kurze Verweilzeit in Stufe b) und c),
- Abbruch der Schmelzphase-Polykondensationsreaktion vor Erreichen des maximal möglichen Polykondensationsgrades, gemessen als Viskosität.

So erwies es sich als notwendig, der Terephthalsäure nur soviel Diol zuzumischen, daß eine bei 55 bis 80 °C fließfähige Paste entsteht, was je nach Terephthalsäure-Qualität einem Mol-Verhältnis von Diol zu Disäure von 1,0 bis 1,5 zu 1, vorzugsweise von 1,1 bis 1,3 zu 1, entspricht.

Diese Paste wird, wie üblich, in das bei kontinuierlicher Fahrweise im Veresterungsreaktor stets vorhandene Veresterungsgemisch eingespeist.

Weiteres Diol bis zu einem Gesamt-Mol-Verhältnis Diol zu Disäure von 1,2 bis 2,0 zu 1, vorzugsweise von 1,3 bis 1,8 zu 1, wird hingegen separat in die Sumpfphase oder bevorzugt in den Dampfraum des Veresterungsreaktors eingeführt.

Von den verschiedenen getesteten Titan- und Zinn-Katalysatoren erwiesen sich die organischen Titan-Verbindungen, wie z. B. Titan-tetra-isopropylat und Titan-tetra-n-butanoat als im Sinne der Erfindung besonders geeignet. Ein Zusatz einer Phosphor-Verbindung ist möglich.

Von der Gesamt-Katalysator-Menge wird nur ein Teil, entsprechend 10 bis 250 ppm Ti, vorzugsweise 40 bis 200 ppm Ti, besonders bevorzugt 100 bis 200 ppm Ti, als Komponente der Terephthalsäure-Diol-Paste oder als Lösung in wenig Diol in das Reaktionsgemisch der Veresterungsstufe a) eingeführt. Weiterer in wenig Diol gelöster Katalysator, entsprechend 60 bis 300 ppm Ti, wird dem Gemisch nach der Vorkondensationsstufe b) zugesetzt, wobei es gleichgültig ist, ob die Einspeisung in die Verbindungsleitung zum Polykondensationsreaktor oder in diesen Reaktor selbst erfolgt. Die Gesamtmenge beträgt vorzugsweise 100 bis 400 ppm Ti, besonders bevorzugt 200 bis 400 ppm Ti.

Während die Reaktionsdrücke (p) mit

| | |
|---|---|
| pₐ = 0,8 - 2,0 bar, | bevorzugt 0,9 - 1,2 bar, |
| P_{b} = 0,01 - 1,5 bar, | bevorzugt 0,5 - 1,1 bar, |
| p_{c} < 1,5 mbar, | bevorzugt < 0,5 mbar, |

in den für Polyalkylenterephthalate üblichen Bereichen liegen, ist die Temperaturführung kritisch. Abweichungen von den angegebenen Temperaturbereichen

| | |
|---|---|
| tₐ = 265 - 305 °C, | bevorzugt 285 - 296 °C, |
| | besonders bevorzugt 290 - 296 °C, |
| t_{b} = 290 - 305 °C, | bevorzugt 294 - 298 °C, |
| t_{c} = 295 - 310 °C, | bevorzugt 300 - 305 °C, |

mit t_{c} ≥ t_{b}

nach oben führen unmittelbar zu vermehrter Produktzersetzung, während Abweichungen nach unten längere Verweilzeiten und daher mittelbar erhöhte Zersetzung bedingen. Örtliche Temperaturabweichungen, sogenannte hot spots, sind zu vermeiden, insbesondere darf die Temperatur t_{C} der Polykondensationsstufe an keiner Stelle um mehr als 5 °C vom vorgegebenen Mittelwert abweichen.

Überraschenderweise wird der Umfang der Abbaureaktionen auch durch die der 1. und 2. Stufe zugeordnete Verweilzeit bzw. deren Polykondensationsgrad bestimmt. Die besten Ergebnisse wurden erzielt, wenn die Veresterungsstufe bis zu einem relativ hohen Umsetzungsgrad von 98,0 bis 99,0 % fortgeführt wird und die Verweilzeit in der nachfolgenden Vorkondensationsstufe verhältnismäßig kurz ist, entsprechend einem Umsetzungsgrad von 99,4 bis 99,7 %.

Noch bedeutender ist die Beendigung der Polykondensationsreaktion in der Schmelzphase bei 50 bis 95 % der maximal möglichen Viskosität, vorzugsweise bei 70 bis 95 % oder, wenn das Produkt einer Festphasenpolykondensation unterworfen werden soll, bei 50 - 75 %.

Dies entspricht einer Verweilzeit im Polykondensationsreaktor einschließlich der Zeit bis zum Eintritt in den nachfolgenden Granulator von 20 bis 80 min, vorzugsweise von 30 - 60 min.

Der Viskositätsverlauf (z. B. durch Drehmomentmessung bestimmt) in Funktion der Verweilzeit der Polykondensationsstufe ergibt eine relativ enge Glockenkurve mit kurzer Induktionsphase. Das Viskositätsmaximum kann durch Vorversuch unter gleichen Bedingungen ermittelt werden.

Abbaureaktionen treten grundsätzlich vom Beginn der Polykondensation an auf. Da, wie eingangs geschildert, die Abbauprodukte den Molekül-Aufbau hemmen und den Abbau katalysieren, nehmen die Aufbaureaktionen ständig ab, während die Abbau-Reaktionen zunehmen, wobei dieser konkurrierende Reaktionsverlauf auch bei späterer Verarbeitung aus der Schmelze gilt. Eine ausreichende Thermostabilität des Polyesters ist daher nur zu sichern, wenn die Polykondensation abgebrochen wird, bevor nennenswerte Mengen an Abbauprodukten, gemessen als bromtitrierbare Doppelbindungen und als freie COOH-Gruppen, entstanden sind, d. h. bevor das Viskositätsmaximum erreicht ist.

Das erfindungsgemäße Verfahren führt zu einem verhältnismäßig hochmolekularen Polyester mit einer Intrinsic-Viskosität von mindestens 0,60 dl/g, die für die Mehrzahl der Anwendungsfälle, wie z. B. technische Kunststoffe, insbesondere Compounds mit anderen Polymeren und/oder Füllstoffen, völlig ausreicht. Eine weitere Erhöhung der Intrinsic-Viskosität läßt sich durch Festphasenpolykondensation von 4 bis 8 h bei konstanter oder veränderlicher Temperatur im Bereich von 210 bis 280 °C erreichen. Ein Viskositätsaufbau durch Festphasenpolykondensation ist jedoch nur möglich, wenn die Schmelzepolykondensation vor Erreichen der in der Schmelzphase maximal erzielbaren Viskosität abgebrochen wurde.

Das durch das erfindungsgemäße Verfahren erhaltene Polymer enthält weniger als 200 meq/kg Polyester, vorzugsweise weniger als 100 meq/kg Polyester an mit Brom titrierbaren Doppelbindungen und weniger als 40 meq/kg Polyester, vorzugsweise weniger als 25 meq/kg Polyester an freien COOH-Gruppen.

Üblicherweise werden die einzelnen Verfahrensstufen a), b) und c) in mindestens drei separaten, durch Leitungen verbundenen Reaktoren durchgeführt, wobei insbesondere den Stufen b) und c) auch pro Stufe zwei oder drei in Reihe geschaltete Reaktoren zugeordnet sein können. Stufe a) und b) können auch gleichzeitig in ein und demselben Reaktor ausgeführt werden, wobei der Reaktor aus zwei mit dem gleichen Dampfraum kommunizierenden Kammern besteht. In der ersten Kammer erfolgt die Veresterung unter Rohstoffzufuhr und in der zweiten Kammer die Vorkondensation und der Produktaustrag.

Die nachfolgenden Beispiele unterstützen die Erfindung, ohne sie einzuschränken. Die Eigenschaftswerte des Polyesters wurden nach folgenden Methoden bestimmt:

### Intrinsic-Viskosität (I.V.):

Etwa 125 mg Polyester werden in 25 ml eines Gemisches aus Phenol und 1,2-Dichlorbenzol (3 : 2) gelöst und die Viskosität dieser Lösung bei 25 °C nach Ubbelohde bestimmt. Aus der so erhaltenen relativen Viskosität wird die Intrinsic-Viskosität nach Billmeyer berechnet.

### Bromtitrierbare Doppelbindungen (C=C):

Der Polyester wird unter Druck mit Methanol umgesetzt, der unlösliche Rückstand abgetrennt und in der Lösung der Gehalt an C=C-Bindungen auf bekannte Weise mit Brom in meq/kg bestimmt, wobei eine Blindwertbestimmung vorgenommen werden muß.

### Freie COOH-Gruppen:

Der Polyester wird unter Erwärmen in einem Gemisch aus o-Kresol und Chloroform (70 : 30 Gew.-Tle.) gelöst und der Gehalt an COOH-Gruppen mit 0,05 n ethanolischer Kalilauge gegen Bromthymolblau photometrisch bestimmt.

### Beispiele 1 und 7A und Vergleichsbeispiele 2 bis 6 und 7B:

In einem Edelstahl-Rührreaktor werden 600 Gew.-Teile Veresterungsprodukt eines vorangehenden Versuches vorgelegt und auf die Temperatur tₐ erhitzt. Unter Rühren werden kontinuierlich bei dem Druck pₐ etwa 1000 Gew.-Teile/h einer 70 °C warmen Paste aus 1,4-Bis-(hydroxymethyl)-cyclohexan (CHDM) mit einem cis-/trans-Verhältnis von 30 zu 70 und Terephthalsäure (TPA) sowie Titan-tetra-n-butanoat in das Veresterungsprodukt eingespeist. Gleichzeitig wird in den Dampfraum über dem Veresterungsprodukt flüssiges 1,4-Bis-(hydroxymethyl)-cyclohexan zugespeist. Nach einer mittleren Verweilzeit dₐ bei der Temperatur tₐ wird kontinuierlich Veresterungsprodukt in einen Vorkondensationsreaktor gepumpt, wo es bei dem Druck p_{b} und der Temperatur t_{b} auf einen Umsatz von etwa 99,5 % entsprechend der mittleren Verweilzeit d_{b} vorkondensiert wird.

Das Vorkondensationsprodukt wird kontinuierlich in einen Ringscheiben-Reaktor, wie z. B. im US-A 3 617 225 beschrieben, gepumpt und gleichzeitig Titan-tetra-n-butanoat zugespeist. Nach einer mittleren Verweilzeit d_{c} bei der Temperatur t_{c} und dem Druck p_{c} wird das Produkt kontinuierlich einem Granulator zugeführt.

Die Verfahrensparameter und die Kennwerte der erhaltenen Polyester sind in der nachfolgenden Tabelle zusammengestellt. Die angegebenen Temperaturen t_{c} wichen an keiner Stelle des Reaktors um mehr als 5 °C vom Sollwert ab.

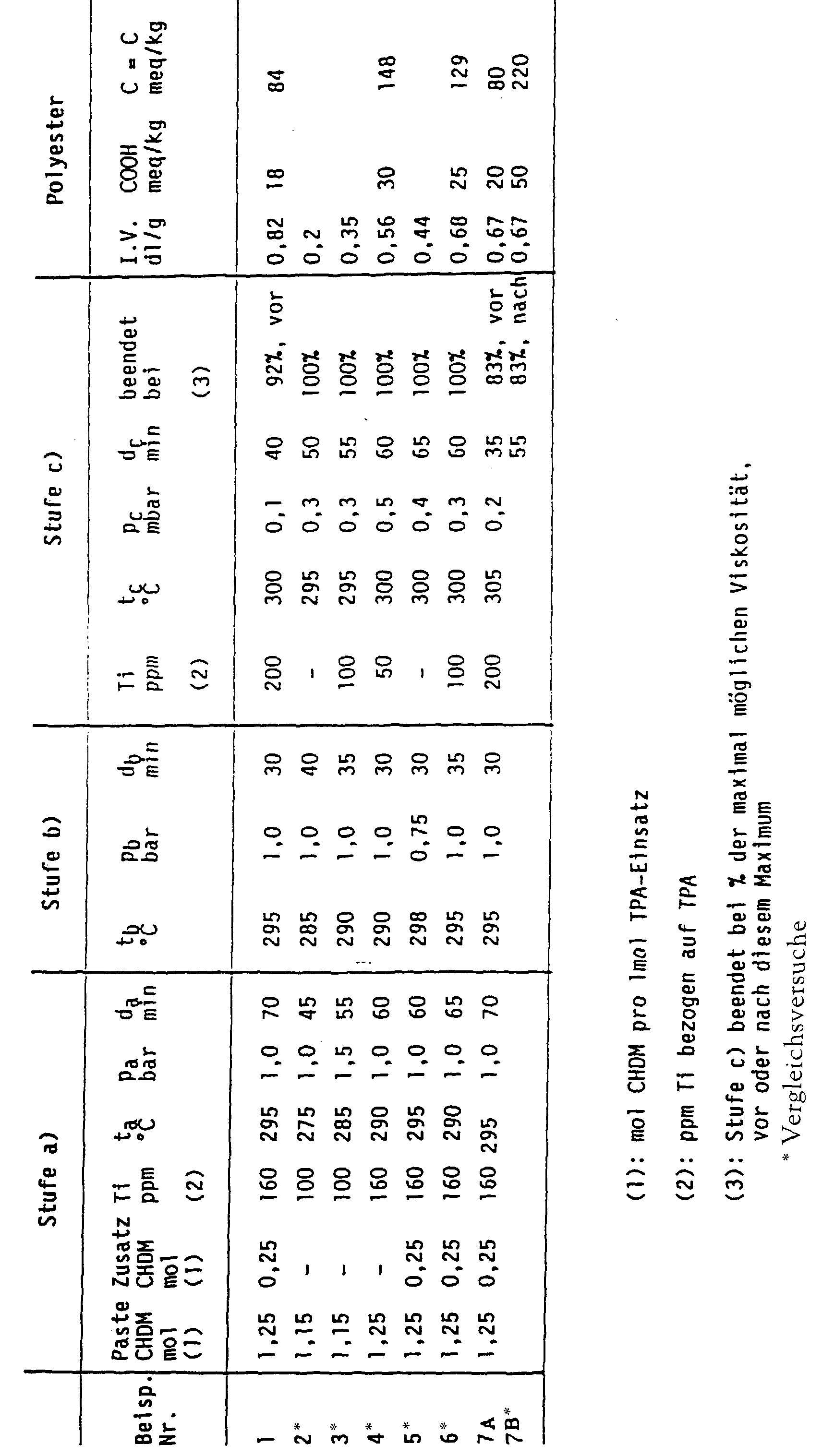

Wie aus der vorstehenden Tabelle ersichtlich ist eine Intrinsic-Viskoität des Polyesters von mindestens 0,60 dl/g nur erreichbar, wenn sämtliche erfindungsgemäßen Parameter gleichzeitig eingehalten werden. So konnte bei den als Vergleich aufgeführten Beispielen 2 bis 5, bei denen die Zusatz-CHDM-Einspeisung und/oder die zweite Titan-Katalysator-Zugabe weggelassen wurde(n), kein nennenswerter Viskositätsaufbau in der Polykondensationsstufe erzielt werden.

Bei Fortführung der Polykondensationsstufe über die maximal mögliche Viskosität hinaus nimmt, wie Beispiel 7 zeigt, die Anzahl an freien COOH-Gruppen und an bromtitrierbaren Doppelbindungen schnell zu und die Viskosität ab.

### Beispiel 8:

Beispiel 1 wird wiederholt, an Stelle von Terephthalsäure wird jedoch ein Gemisch aus Terephthalsäure und 9 Gew.-% Isophthalsäure eingesetzt. Der erhaltene Co-Polyester hat folgende Kennwerte:
- Intrinsic-Viskosität: 0,81 dl/g
- Bromtitrierbare Doppelbindungen: 90 meq/kg
- Freie COOH-Gruppen: 25 meq/kg

### Beispiel 9:

Beispiel 1 wird wiederholt, jedoch werden 30 Mol.-% des 1,4-Bis-(hydroxymethyl)-cyclohexans durch Diethylenglykol ersetzt. Der erhaltene Copolyester enthält 4,7 Gew.-% Diethylenglykol entsprechend 12,75 Mol.-%, bezogen auf Polyester, und hat folgende Kennwerte:
- Intrinsic-Viskosität: (entsprechend 88 % der maximal möglichen Viskosität) 0,742 dl/g
- Bromtitrierbare Doppelbindungen: 68 meq/kg
- Freie COOH-Gruppen: 15 meq/kg

### Beispiel 10:

Beispiel 1 wird wiederholt, jedoch wird die Polykondensation in der Schmelze bei einer I.V. von 0,56 dl/g entsprechend ca. 65 % oder maximal möglichen Viskosität (0,86 dl/g) abgebrochen und das Granulat einer Festphasenkondensation von 5 h bei einer Temperatur von 260 °C im Stickstoff-Strom unterworfen. Der erhaltene Polyester hat folgende Kennwerte:
- Intrinsic-Viskosität: 0,93 dl/g
- Bromtitrierbare Doppelbindungen: 90 meq/kg
- Freie COOH-Gruppen: 21 meq/kg

### Vergleichsbeispiel 11:

Beispiel 1 wird wiederholt, aber die Schmelzekondensation bis zum Viskositätsmaximum durchgeführt. Der erhaltene Polyester mit einer I.V. von 0,85 dl/g wird einer Festphasenkondensation, wie in Beispiel 10, unterworfen. Der Polyester hat danach folgende Kennwerte:
- Intrinsic-Viskosität: 0,82 dl/g
- Bromtitrierbare Doppelbindungen: 250 meq/kg
- Freie COOH-Gruppen: 58 meq/kg

Offensichtlich ist ein Viskositätsaufbau durch Feststoffpolykondensation nicht möglich, wenn die Schmelzphasenpolykondensation bis zu der in der Schmelzphase maximal möglichen Viskosität fortgeführt wurde. Wird die Schmelzphasenpolykondensation vorzeitig abgebrochen, so läßt sich, wie Beispiel 10 zeigt, die Viskosität durch Festphasenpolykondensation über das in der Schmelzphase erzielbare Maximum hinaus steigern.

## Patentansprüche

1. Verfahren zur kontinuierlichen Herstellung von Polyestern mit mindestens 80 Mol.-% (1,4-Cyclohexandimethylen)-terephthalat-Einheiten, einer Intrinsic-Viskosität von mindestens 0,60 dl/g, weniger als 200 meq/kg an bromtitrierbaren Doppelbindungen und weniger als 40 meq/kg an freien COOH-Gruppen, ausgehend von Terephthalsäure und 1,4-Bis-(hydroxymethyl)-cyclohexan mit einem cis-/trans-Isomerenverhältnis von 20 bis 40 zu 80 bis 60, dadurch gekennzeichnet, daß
a) eine fließfähige 55 bis 80 °C warme Paste aus 1,4-Bis-(hydroxymethyl)-cyclohexan und Terephthalsäure sowie gegebenenfalls Comonomeren im Mol-Verhältnis Diol zu Disäure von 1,0 bis 1,5 zu 1 kontinuierlich in einen Veresterungsreaktor eingeführt wird und gleichzeitig kontinuierlich soviel auf 50 bis 80 °C erwärmtes 1,4-Bis-(hydroxymethyl)-cyclohexan separat in den Veresterungsreaktor eingeführt wird, daß das Gesamt-Mol-Verhältnis Diol zu Disäure 1,2 bis 2,0 zu 1 beträgt, und das Gemisch in Gegenwart von, bezogen auf Disäure, 10 bis 250 ppm Ti in Form einer organischen Titanverbindung bei einer Temperatur tₐ im Bereich von 265 bis 305 °C, einem Druck im Bereich von 0,8 bis 2,0 bar und einer Verweilzeit im Bereich von 20 bis 100 min kontinuierlich bis zu einem Umsetzungsgrad von 98,0 bis 99,0 % verestert wird,
b) das Gemisch aus Stufe a) bei einer Temperatur t_{b} im Bereich von 290 bis 305 °C, bei einem Druck im Bereich von 0,01 bis 1,5 bar und einer Verweilzeit im Bereich von 10 bis 70 min kontinuierlich bis zu einem Umsetzungsgrad von 99,4 bis 99,7 % vorkondensiert wird und
c) das mit weiteren 60 bis 300 ppm Ti, bezogen auf Disäure, in Form einer organischen Titanverbindung versetzte Gemisch aus Stufe b) bei einer Temperatur t_{c} ≥ t_{b} im Bereich von 295 bis 310 °C unter Ausschluß örtlicher Temperaturabweichungen von mehr als 5 °C, einem Druck von weniger als 1,5 mbar und einer Verweilzeit im Bereich von 20 bis 80 min kontinuierlich bis zu einem Umsetzungsgrad entsprechend 50 bis 95 % der im Vorversuch unter gleichen Bedingungen ermittelten, maximal möglichen Viskosität polykondensiert wird.

2. Verfahren gemäß Anspruch 1, dadurch gekennzeichnet, daß
in Stufe a) das Mol-Verhältnis Diol zu Disäure in der Paste 1,1 bis 1,3 zu 1 und im Gesamt-Gemisch 1,3 bis 1,8 zu 1 beträgt, die Ti-Menge 40 bis 200 ppm beträgt, der Druck im Bereich von 0,9 bis 1,2 bar, die Temperatur tₐ im Bereich von 285 bis 296 °C und die Verweilzeit im Bereich von 30 bis 60 min liegt,
in Stufe b) der Druck im Bereich von 0,5 bis 1,1 bar, die Temperatur t_{b} im Bereich von 294 bis 298 °C und die Verweilzeit im Bereich von 20 bis 50 min liegt,
in Stufe c) der Druck weniger als 0,5 mbar beträgt, die Temperatur t_{c} im Bereich von 300 bis 305 °C und die Verweilzeit im Bereich von 30 bis 60 min liegt und
die Summe der Titanverbindungen der Stufen a) und c) 100 bis 400 ppm Ti beträgt.

3. Verfahren gemäß Anspruch 1, dadurch gekennzeichnet, daß der Umsetzungsgrad in Stufe c) entsprechend 70 bis 95 % der maximal möglichen Viskosität begrenzt wird.

4. Verfahren gemäß Anspruch 1, dadurch gekennzeichnet, daß der Polyester aus Stufe c) nach der Granulierung einer Festphasenpolykondensation von 4 bis 8 h bei einer konstanten oder veränderlichen Temperatur im Bereich von 210 bis 280 °C unterworfen wird.

5. Verfahren gemäß Anspruch 4, dadurch gekennzeichnet, daß der Umsetzungsgrad in Stufe c) entsprechend 50 bis 75 % der maximal möglichen Viskosität begrenzt wird.

## Claims

1. Process for the continuous preparation of polyesters with at least 80 mol-% of(1,4-cyclohexanedimethylene)-terephthalate units, an intrinsic viscosity of at least 0.60 dl/g, less than 200 meq/kg of bromine-titratable double bonds and less than 40 meq/kg of free COOH groups, starting from terephthalic acid and 1,4-bis-(hydroxymethyl)-cyclohexane with a cis/trans isomer ratio of 20 - 40 : 80 - 60, characterised in that
a) a free-flowing paste, heated to 55 to 80°C, of 1,4-bis-(hydroxymethyl)-cyclohexane and terephthalic acid and optionally comonomers, in the molar ratio diol to diacid of 1.0 - 1.5 to 1, is continuously introduced to an esterification reactor and at the same time enough 1,4-bis-(hydroxy-methyl)-cyclohexane, heated to 50 to 80°C, is continuously and separately introduced into the esterification reactor for the total molar ratio of diol to diacid to amount to 1.2 - 2.0 to 1, and the mixture is continuously esterified up to a degree of conversion of 98.0 to 99.0 % in the presence of 10 to 250 ppm of Ti, with respect to diacid, in the form of an organic titanium compound, at a temperature tₐ in the range 265 to 305°C, at a pressure in the range 0.8 to 2.0 bar and with a residence time in the range 20 to 100 min,
b) the mixture from stage a) is continuously precondensed up to a degree of conversion of 99.4 to 99.7 % at a temperature t_{b} in the range 290 to 305°C, at a pressure in the range 0.01 to 1.5 bar and with a residence time in the range 10 to 70 min and
c) the mixture from stage b), with a further 60 to 300 ppm of Ti, with respect to the diacid, added thereto in the form of an organic titanium compound, is continuously polycondensed up to a degree of conversion coresponding to 50 to 95 % of the maximum possible viscosity, as determined under the same conditions in a preliminary trial, at a temperature t_{c} ≥ t_{b} in the range 295 to 310°C with the exclusion of local temperature variations of more than 5°C, at a pressure of less than 1.5 mbar and with a residence time in the range 20 to 80 min.

2. Process according to Claim 1, characterised in that
in stage a) the molar ratio diol to diacid in the paste is 1.1 - 1.3 to 1 and in the total mixture is 1.3 - 1.8 to 1, the amount of Ti is 40 to 200 ppm, the pressure is in the range 0.9 to 1.2 bar, temperature tₐ is in the range 285 to 296°C and the residence time is in the range 30 to 60 min,
in stage b) the pressure is in the range 0.5 to 1.1 bar, temperature t_{b} is in the range 294 to 298°C and the residence time is in the range 20 to 50 min,
in stage c) the pressure is less than 0.5 mbar, temperature t_{c} is in the range 300 to 305°C and the residence time is in the range 30 to 60 min and
the sum of the titanium compounds in stages a) and c) is 100 to 400 ppm of Ti.

3. Process according to Claim 1, characterised in that the degree of conversion in stage c) is restricted to correspond to 70 to 95 % of the maximum possible viscosity.

4. Process according to Claim 1, characterised in that the polyester from stage c), after granulation, is subjected to a solid phase polycondensation of 4 to 8 h at a constant or variable temperature in the range 210 to 280°C.

5. Process according to Claim 4, characterised in that the degree of conversion in stage c) is restricted to correspond to 50 to 75 % of the maximum possible viscosity.

## Revendications

1. Procédé de préparation en continu de polyesters avec au moins 80 % molaires de motifs téréphtalate de 1,4-cyclohexanediméthylène, avec une viscosité intrinsèque d'au moins 0,60 dl/g, moins de 200 mEq./kg de doubles liaisons dosables par le brome et moins de 40 mEq./kg de groupes COOH libres, en partant d'acide téréphtalique et de 1,4-bis-(hydroxyméthyl)-cyclohexane avec un rapport d'isomères cis/trans de 20 à 40 pour 80 à 60, caractérisé en ce que
a) on introduit une pâte chaude coulable de 55 à 80°C de 1,4-bis-(hydroxyméthyl)-cyclohexane et d'acide téréphtalique ainsi que, le cas échéant, des comonomères en rapport molaire du diol au diacide de 1,0 à 1,5 pour 1 en continu dans un réacteur d'estérification et, simultanément en continu, on introduit dans le réacteur d'estérification suffisamment de 1,4-bis-(hydroxyméthyl)-cyclohexane chauffé entre 50 et 80°C à part, de sorte que le rapport molaire global du diol au diacide est 1,2 à 2,0 pour 1, et on estérifie le mélange en présence de, par rapport au diacide, 10 à 250 ppm de Ti sous forme d'un composé organique de titane à une température tₐ comprise dans l'intervalle de 265 à 305°C, sous une pression comprise entre 0,8 et 2,0 bar et avec une durée de séjour comprise entre 20 et 100 min en continu jusqu'à un degré de réaction de 98,0 à 99,0 %,
b) on précondense le mélange de l'étape a) à une température t_{b} dans l'intervalle de 290 à 305°C, sous une pression comprise dans l'intervalle de 0,01 à 1,5 bar et pendant une durée de séjour comprise dans l'intervalle de 10 à 70 min en continu jusqu'à un degré de réaction de 99,4 à 99,7 % et
c) on polycondense le mélange de l'étape b) auquel on a encore ajouté 60 à 300 ppm de Ti, par rapport au diacide, sous forme d'un composé organique de titane, à une température t_{c} ≥ t_{b} dans l'intervalle de 295 à 310°C à l'exclusion de tout écart local de température supérieur à plus de 5°C, sous une pression inférieure à 1,5 mbar et avec une durée de séjour dans l'intervalle de 20 à 80 min en continu jusqu'à un degré de réaction correspondant à 50 à 95 % de la viscosité maximale possible déterminée dans les mêmes conditions dans un essai préalable.

2. Procédé selon la revendication 1, caractérisé en ce qu'à l'étape a), le rapport molaire du diol au diacide dans la pâte est 1,1 à 1,3 pour 1 et dans le mélange global 1,3 à 1,8 pour 1, la quantité de Ti représente 40 à 200 ppm, la pression est dans l'intervalle de 0,9 à 1,2 bar, la température tₐ est dans l'intervalle de 285 à 296°C et la durée de séjour est dans l'intervalle de 30 à 60 min.
à l'étape b), la pression est dans l'intervalle de 0,5 à 1,1 bar, la température t_{b} est dans l'intervalle de 294 à 298°C et la durée de séjour est dans l'intervalle de 20 à 50 min,
à l'étape c), la pression est inférieure à 0,5 mbar, la température t_{c} est dans l'intervalle de 300 à 305°C et la durée de séjour est dans l'intervalle de 30 à 60 min et
la somme des composés de titane des étapes a) et c) représente 100 à 400 ppm de Ti.

3. Procédé selon la revendication 1, caractérisé en ce que le degré de réaction à l'étape c) est limité conformément à 70 à 95 % de la viscosité maximale possible.

4. Procédé selon la revendication 1, caractérisé en ce qu'on soumet le polyester de l'étape c) après la granulation à une polycondensation en phase solide de 4 à 8 h sous une température constante ou variable dans l'intervalle de 210 à 280°C.

5. Procédé selon la revendication 4, caractérisé en ce que le degré de réaction à l'étape c) est limité conformément à 50 à 75 % de la viscosité maximale possible.
